Europäisches Patentamt

European Patent Office

Office européen des brevets

(11) Veröffentlichungsnummer: **0 505 693 A1**

(12) **EUROPÄISCHE PATENTANMELDUNG**

(21) Anmeldenummer: **92101635.8**

(22) Anmeldetag: **31.01.92**

(51) Int. Cl.⁵: **F16J 15/12**

Geänderte Patentansprüche gemäss Regel 86
(2) EPÜ.

(30) Priorität: **26.03.91 DE 4109951**

(43) Veröffentlichungstag der Anmeldung:
**30.09.92 Patentblatt 92/40**

(84) Benannte Vertragsstaaten:
**DE FR GB IT**

(71) Anmelder: **REINZ-DICHTUNGS-GMBH**
**Reinzstrasse 3-7**
**W-7910 Neu-Ulm(DE)**

(72) Erfinder: **Weiss, Alfred**
**Kastanienweg 1**
**W-7910 Neu-Ulm(DE)**
Erfinder: **Hieble, Franz**
**Holderstrasse 14**
**W-7913 Senden-Aufheim(DE)**
Erfinder: **Gladen, Rolf, Dr.**
**Mühlhausstrasse 6**
**W-7405 Dettenhausen(DE)**

(74) Vertreter: **Weber, Otto Ernst, Dipl.-Phys. et al**
**Weber & Heim Hofbrunnstrasse 36**
**W-8000 München 71(DE)**

(54) **Blech-Elastomer-Flachdichtung.**

(57) Die Erfindung betrifft eine Flachdichtung mit einem Blechkörper, der zumindest eine Ausnehmung und ein im Bereich der Ausnehmung vorgesehenes elastomeres Dichtelement aufweist. Zugunsten einer einfachen Herstellbarkeit und einer flexiblen Ausgestaltung der Flachdichtung ist es erfindungsgemäß vorgesehen, das elastomere Dichtelement als getrennt vom Blechkörper hergestelltes Teil auszubilden, das dann mit dem Blechkörper fest verbunden wird.

Fig. 2

EP 0 505 693 A1

Die Erfindung betrifft eine Flachdichtung der im Oberbegriff des Anspruchs 1 angegebenen Art.

Flachdichtungen kommen unter anderem bei Verbrennungsmotoren zum Einsatz und müssen dort bei unterschiedlicher dynamischer oder statischer Belastung gegen hohe und höchste Temperaturen ebenso beständig sein wie gegenüber unterschiedlichen Fluiden, wie beispielsweise Kraftstoffen, Schmierstoffen, Kühlfluiden und Verbrennungsgasen. Ein typisches Beispiel für eine Flachdichtung mit einer Mehrzahl von im Bereich unterschiedlicher Fluiddurchtritte liegenden Ausnehmungen ist die Zylinderkopfdichtung. Diese besteht üblicherweise aus einem Blechkörper, auf welchen ein Weichstoff aufgewalzt und gegebenenfalls imprägniert ist. Zur Abdichtung gegenüber heißen Verbrennungsgasen werden metallische Einfassungen oder Sicken eingesetzt. In zunehmendem Maße ist jedoch dieser Dichtungstyp überfordert, weil gesteigerte Motorleistungen und die gleichzeitige Verwendung unterschiedlicher Metalle beispielsweise für Motorblock und Zylinderkopf zu unterschiedlichen Wärmeausdehnungen dieser Motorteile führen, wodurch die Dichtung mit Relativbewegungen der angrenzenden Motorteile belastet wird, die den aufgewalzten Weichstoff in Gestalt von Scherbeanspruchungen zerstören. Hinzu kommt, daß als Weichstoff in zunehmendem Maße asbestfreie Werkstoffe zum Einsatz gelangen, die im allgemeinen nicht dieselben Festigkeitseigenschaften wie herkömmliche Asbestwerkstoffe aufweisen.

Ein weiteres Problem bei Zylinderkopfdichtungen besteht darin, die vorhandenen Schraubenkräfte der Motorblock-/Zylinderkopfkonstruktion so auf die metallische Brennraumeinfassung und den Weichstoffteil der Dichtung zu verteilen, daß einerseits die Brennräume zuverlässig und dauerhaft abgedichtet sind, und andererseits der Weichstoff im Bereich der Öl- und Wasserbohrungen noch genügend verdichtet wird. Moderne Zylinderkopfdichtungen auf der Basis Blech-/Weichstoffkörper enthalten deshalb zusätzliche, in teuren und aufwendigen Arbeitsgängen aufgebrachte Hilfskonstruktionen, wie beispielsweise Siebdruckwulste, um örtlich eine höhere Pressung im Weichstoff zu erzielen. Ein anderer Ansatz zur Lösung des genannten Problems besteht darin, die Zylinderkopfdichtung aus mehreren Metallagen mit unterschiedlichen Sickenkonstruktionen aufzubauen, wodurch einerseits die erwünschte elastische Verformung und andererseits die erwünschte Rückstellkraft erzielt sowie außerdem eine ausreichende mechanische Stabilität gewährleistet wird. Eine solche weitgehend rein metallische Flachdichtung weist jedoch materialspezifische Nachteile auf. So benötigen rein metallische Flachdichtungen aufgrund des großen Elastizitätsmoduls hohe Verformungs- und damit Schraubenkräfte. Außerdem sind bei solchen Dichtungen im Laufe der Zeit Ermüdungserscheinungen zu beobachten, die sich in einem Abfall der elastischen Rückverformbarkeit äußern, was letztlich zur Leckage führt. Ein weiterer Nachteil rein metallischer Dichtungen besteht darin, daß zur sogenannten Hinterlandabdichtung ein Großteil der Schraubenkräfte gebunden wird, so daß sich eine ungünstige Kräfteverteilung zwischen der Trennraumabdichtung und der Hinterlandabdichtung ergibt.

Die vorstehend aufgeführten Nachteile rein metallischer Flachdichtungen sowie von Flachdichtungen, auf deren Blechkörper ein Weichstoff aufgewalzt ist, werden bei Flachdichtungen der eingangs genannten Art weitgehend vermieden. Eine derartige Flachdichtung ist aus der EP O 339 128 A2 bekannt. Diese bekannte, als Zylinderkopfdichtung ausgelegte Flachdichtung umfaßt einen massiven Blechkörper, der zur Brennraumabdichtung sickenförmig umgeformt ist, während die Flüssigkeitsbohrungen mit anvulkanisierten elastomeren Dichtelementen abgedichtet sind. Auch diese Konstruktion ist jedoch mit schwerwiegenden Nachteilen behaftet. So werden beispielsweise für die Brennraumabdichtung aufgrund der massiven Sicke hohe Preßdrucke benötigt, welche zu Festigkeitsproblemen im gesamten Motor-/Zylinderkopfbereich führen, besonders wenn dieser Bereich in heute üblicher Weise aus Guß und Aluminium hergestellt ist. Ein weiteres Problem besteht in der schnellen Ermüdung der dickwandigen Dichtungssicke.

Darüber hinaus ist diese bekannte Flachdichtung mit Bezug auf ihre Herstellung problematisch.

So ist es beispielsweise erforderlich, die zur Herstellung der Elastomerdichtstellen gestanzten Blech- oder Metallkörper in der Bohrung sandzustrahlen. Dabei dürfen die Oberflächen des Blechkörpers aus Korrosionsgründen nicht aufgerauht werden. Schließlich muß auf die sandgestrahlten Bereiche ein Haftvermittler aufgebracht werden, bevor das elastomere Dichtungsmaterial aufgepreßt oder aufgespritzt wird. Diese Arbeitsgänge, insbesondere die Elastomerverarbeitung, einschließlich dem Vulkanisierprozeß, sind wegen unvermeidbarem Ausschuß problematisch. So hat sich gezeigt, daß bei der Herstellung von kleinteiligen Flachdichtungen der Ausschuß im Bereich von einem Prozent bis einigen Prozent liegt. Bei größeren Flachdichtungen, wie beispielsweise Zylinderkopfdichtungen mit typischerweise 20 aufvulkanisierten Elastomerdichtelementen bedeutet dies, daß von fünf Zylinderkopfdichtungen mit insgesamt 100 elastischen Dichtelementen zumindest eine Zylinderkopfdichtung ein fehlerhaftes elastomeres Dichtelement aufweist, so daß der Ausschuß in diesem Fall 20 % beträgt, da bereits ein einziges fehlerhaftes elastomeres Dichtelement die gesamte Zylinderkopfdichtung unbrauchbar macht. Die Herstellung solcher Flachdichtungen ist also unwirtschaftlich. Ein weiterer Nachteil besteht darin, daß zum Anformen der elastomeren Dichtelemente an die Blechkörper große Pressen oder Spritzpressen mit sehr komplizierten Formen benötigt werden, die entsprechend teuer sind. Nachdem andererseits bezogen auf die Gesamtfläche einer Zylinderkopfdichtung die Anzahl der elastomeren Dichtelemente und damit die ausgenutzte Fläche der Preßplatten gering ist, wird die Presse nicht ausgelastet, arbeitet also unwirtschaftlich. Außerdem ist es in einem wirtschaftlich vertretbaren Rahmen nicht möglich, bei dieser Konzeption einer Zylinderkopfdichtung unterschiedliche Elastomerwerkstoffe auf der Zylinderkopfdichtung zu vereinen.

Die **Aufgabe** der vorliegenden Erfindung besteht darin, eine Flachdichtung der eingangs genannten Art zu schaffen, die einfach und wirtschaftlich hergestellt werden kann, und die mit Bezug auf die unterschiedlichen Dichtungsansprüche flexibel ausgestaltet werden kann.

Gelöst wird diese Aufgabe durch die kennzeichnenden Merkmale des Anspruchs 1. Vorteilhafte Weiterbildungen der Erfindung sind in den Unteransprüchen angegeben.

Demnach ist es also erfindungsgemäß vorgesehen, das elastomere Dichtelement oder die elastomeren Dichtelemente getrennt vom Blechkörper fertigzustellen und als Fertigteil im Blechkörper mechanisch zu verankern. Die separate Herstellung der elastomeren Dichtelemente und die anschließende Anordnung dieser Elemente in den entsprechenden Blechkörperausnehmungen hat eine Reihe sowohl funktioneller als auch kommerzieller Vorzüge, welche durch den Stand der Technik nicht erreichbar sind:

1. Da alle elastomeren Dichtelemente separat vom Blechkörper hergestellt werden, kann die Kapazität der hierzu verwendeten (Spritz-)Presse voll ausgenützt werden.

2. Der Ausschuß bei der Herstellung der elastomeren Dichtelemente in der Presse, der üblicherweise bei ca. einem Prozent liegt, wirkt sich nicht ungünstig auf die Ausschußrate der gesamten Flachdichtung aus, weil die elastomeren Dichtelemente vor dem Einsetzen in die Flachdichtung selektiert werden, so daß nur einwandfreie elastomere Dichtungselemente zum Einsatz gelangen.

3. Jedes in die Flachdichtung eingesetzte elastomere Dichtelement kann auf das abzudichtende Fluid oder Medium gezielt abgestimmt werden, so daß technisch und wirtschaftlich optimale Flachdichtungen realisierbar sind. Durch eine nahezu beliebige Kombinationsmöglichkeit entsprechender Werkstoffe ist es daher möglich, auf der Grundlage preiswerter Elastomere eine technisch wesentlich vollkommenere Abdichtung zu erzielen, als dies beispielsweise mit Fluorkautschuk als einzigem eingesetzten Elastomer in einer Flachdichtung mit anvulkanisiertem Dichtelement möglich wäre. Im letztgenannten ungünstigen Fall müßte der Fluorkautschuk zudem peroxidisch vernetzt sein, um gegen Kühlwasser ausreichend beständig zu sein, wodurch die Flachdichtung teuer und schwierig zu verarbeiten wird und zudem eine schlechte Kältebeständigkeit aufweist.

4. Durch die Verwendung unterschiedlicher Einlagen oder Verstärkungen für die elastomeren Dichtelemente und/oder unterschiedlicher Konfigurationen dieser Elemente können gezielt unterschiedliche Verformungskennlinien für diese erzielt werden.

5. Je nach Gestaltung der Dichtstelle können die elastomeren Dichtelemente im Haupt- oder Nebenschluß abdichtend verwendet werden.

Die vorliegende Erfindung bietet also eine optimale Flexibilität bei der Ausgestaltung von Flachdichtungen, die durch herkömmliche Flachdichtungen nicht erzielbar ist. Bei den vorstehend erwähnten Einlagen für die elastomeren Dichtelemente handelt es sich vorteilhafterweise um metallische Verstärkungselemente, die vorteilhafterweise zumindest teilweise in das elastomere Dichtelement eingebettet sind. Die vorstehend ebenfalls angesprochene Strukturierung der elastischen Dichtelemente ist vorteilhafterweise in Gestalt von Dichtwulsten und/oder Dichtlippen ausgebildet, wobei in einer weiteren vorteilhaften Variante gezielt ein Teil der Dichtwulste oder Dichtlippen durch eine Einlage verstärkt ist. Durch eine partielle Verstärkung der elastomeren Dichtelemente ist es möglich, ohne die Lippen- oder Wulstgeometrie zu verändern, Dichtstellen mit unterschiedlichen Verformungskennlinien zu erzeugen, da Lippen oder Wulste ohne eine Verstärkungseinlage weicher sind als solche mit einer Einlage. Dies ist deshalb von Vorteil, weil bei der begrenzten Dicke der elastomeren Dichtelemente wenig Platz für Varianten der Lippen- oder/und Wulstgeometrie verbleibt.

Ein entscheidender Vorteil der vorliegenden Erfindung besteht darin, daß im Falle einer komplex aufgebauten Flachdichtung, wie beispielsweise einer Zylinderkopfdichtung durch die separaten elastomeren Dichtungselemente gezielt Einfluß auf die Dichtungseigenschaften der Flachdichtung genommen werden kann. Mit anderen Worten ist die erfindungsgemäße Flachdichtung problemlos auf die durch die Dichtungsausnehmungen hindurchtretenden Fluide abstimmbar, und zwar sowohl durch die vorstehend angesprochene Konfiguration der elastomeren Dichtungselemente oder/und geeignet eingebettete Verstärkungseinlagen wie auch durch die Auswahl des Materials für diese Dichtelemente.

Bei Zylinderkopfdichtungen können so beispielsweise die Ölbohrungen mit elastomeren Dichtungselementen auf der Basis von Nitrilkautschuk, hydriertem Nitrilkautschuk, Acrylkautschuk, Silikonkautschuk, Fluorkautschuk oder anderen ölbeständigen Kautschuken abgedichtet werden. Für die Kühlwasserbohrungen oder -ausnehmungen kommen demgegenüber beispielsweise Naturkautschuk, Styrol-Butadienkautschuk, Ethylen-Propylenkautschuk, Silikonkautschuk, Vamac usw. in Betracht. Ferner können je nach Temperatur des entsprechenden Fluides an unterschiedlichen Stellen der Zylinderkopfdichtung unterschiedliche Elastomere eingesetzt werden, wie beispielsweise teure Fluorkautschuke bei Öltemperaturen um 150 Grad Celsius, preisweitere hydrierte Nitrilkautschuke oder Silikonkautschuke bei Temperaturen um 130 Grad, usw. Ebenso können anstelle unterschiedlicher Flächenpressungen Dichtelemente mit unterschiedlicher Härte verwendet werden.

Der Blechkörper der in Rede stehenden Flachdichtung kann entweder ein- oder mehrlagig ausgebildet sind. Letztere Ausbildung mit mehreren Blechlagen hat den Vorteil, daß in einer Ausnehmung zur Abdichtung heißer Gase, wie beispielsweise Verbrennungsgase, der Dichtungssickenring einfach umgeformt werden kann, nämlich beispielsweise ausgehend von einer einzigen Blechlage oder doch wenigen Blechlagen. Da diese Blechlage immer wesentlich dünner ist als die Gesamtdicke des Blechkörpers aller Lagen, ist auch der Sickenring leichter auszuformen und dichtet daher mit wesentlich geringeren Kräften ab, als bei der vorstehend beschriebenen Flachdichtung gemäß der EP 0 330 128 A2. Außerdem ist eine solche dünnwandige Sicke weniger ermüdungsgefährdet wie eine dickwandige Sicke der herkömmlichen Flachdichtung.

Vorteilhafterweise ist der Blechkörper unabhängig von seiner ein- oder mehrlagigen Ausgestaltung zwischen 0,5 bis 5 mm vor allem 0,6 bis 2 mm stark. Vorzugsweise ist der Blechkörper aus korrosionsfestem Material oder aus korrosionsgeschütztem Material aufgebaut.

Die Befestigung der einzeln hergestellten elastomeren Dichtelemente in den Ausnehmungen des Blechkörpers kann in unterschiedlichster Weise erfolgen. Bevorzugt ist eine formschlüssige Verbindung zwischen elastomerem Dichtelement und Blechkörper. Wenn das elastomere Dichtelement eine Verstärkungseinlage umfaßt, eignet sich ein vorstehender Abschnitt der Einlage besonders gut zur Befestigung am Blechkörper. Dabei ist es vorteilhafterweise vorgesehen, die entsprechende Blechkörperausnehmung mit einer umlaufenden Nut auszubilden, in welche die vorstehende Verstärkungseinlage eingreift. Eine solche Nut im Metallkörper ist darüber hinaus auch zu direktem Anschluß des elastomeren Dichtelements geeignet, das zu diesem Zweck vorteilhafterweise einen umlaufenden, vorzugsweise ringförmigen Vorsprung aufweist. Alternativ hierzu kann vorteilhafterweise das elastomere Dichtelement über eine umlaufende Nut in die entsprechende Blechkörperausnehmung eingesetzt sein, die hierfür mit einem komplementär zur Dichtelementnut ausgebildeten, vorlaufenden Vorsprung versehen ist.

Die Erfindung bietet weiterhin den Vorteil, daß ein einfaches Recycling des verwendeten Materials ermöglicht wird.

Nachfolgend soll die Erfindung anhand der Zeichnung näher erläutert werden; in dieser zeigen:

Fig. 1    Eine Ausführung der erfindungsgemäßen Flachdichtung als Zylinderkopfdichtung,

Fig. 2a-21    unterschiedliche Ausführungsformen elastomerer Dichtelemente für die Flachdichtung von Fig. 1,

Fig. 3a-3d    weitere Ausführungsformen der Dichtelemente in ihrer bestimmungsgemäßen Anordnung im Blechkörper der Flachdichtung und

Fig. 4a-4d    unterschiedliche Ausbildungen von Sickenringdichtelementen der erfindungsgemäßen Flachdichtung.

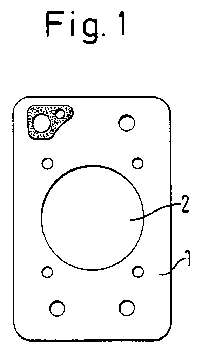

Fig. 1 zeigt eine Zylinderkopfdichtung in Aufsicht. Die Zylinderkopfdichtung besteht aus einem Blechkörper 1 der mit einer Mehrzahl von Durchbrüchen oder Ausnehmungen für den Durchtritt unterschiedlicher Fluide versehen ist. Mit einer zentralen Ausnehmung 2 grenzt die Zylinderkopfdichtung bestimmungsgemäß an einen Motorbrennraum an, während die weiteren, nicht mit Bezugszeichen versehenen Ausnehmungen in der dargestellten Zylinderkopfdichtung im Bereich des Motoröl- und Kühlwasserdurchtritts des Motors liegen, wobei in diese Ausnehmungen elastomere Dichtelemente unterschiedlicher Zusammensetzung und Konfiguration eingesetzt sind. Im linken oberen Abschnitt der in Fig. 1 dargestellten Zylinderkopfdichtung sind zwei nebeneinanderliegende elastomere Dichtelemente zu einem einzigen Dichtelement zusammengefaßt. Nachfolgend soll auf die Gestalt der in den Blechkörperausnehmungen angeordneten Dichtelemente näher eingegangen werden.

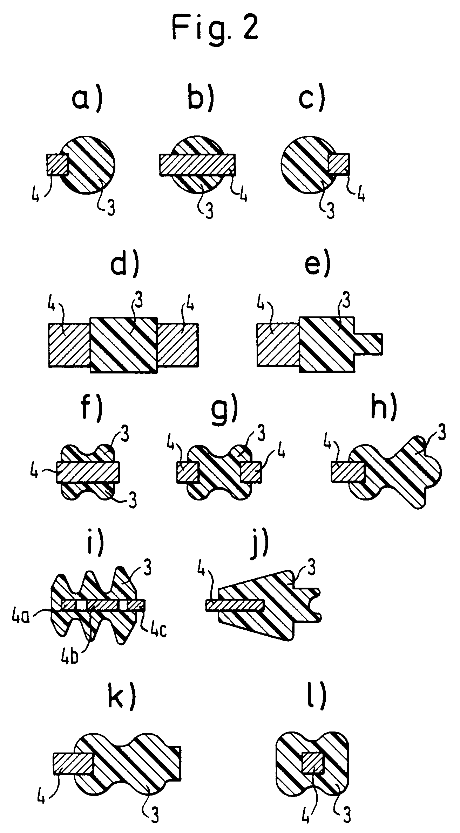

In den Fig. 2a bis 21 sind unterschiedliche Ausführungsformen ringförmiger, elastomerer Dichtelemente im Schnitt dargestellt, die jeweils mit Verstärkungselementen, vorzugsweise metallischen Verstärkungselementen, versehen sind.

In den Fig. 2a bis 2c sind die elastomeren Dichtelemente 3 im Schnitt im wesentlichen kreisförmig ausgebildet. Die Dichtelemente 3 gemäß den Figuren 2a und 2c weisen jeweils außen- beziehungsweise innenliegende über das elastomere Element vorstehende, in dieses also jeweils nur teilweise eingebettete, Verstärkungseinlagen 4 auf. In Fig. 2b durchsetzt die Verstärkungseinlage 4 den elastomeren Körper 3 vollständig, beziehungsweise besteht das elastomere Element 3 aus zwei Hälften, die auf die über diese vorstehende Verstärkungseinlage 4 aufgebracht sind, die vorzugsweise aus Metall besteht.

Die Fig. 2d und 2e zeigen im wesentlichen im Querschnitt rechteckig ausgebildete Elastomerelemente 3, die mit im wesentlichen im Querschnitt ebenfalls rechteckigen Metallverstärkungen beziehungsweise Metallringen 4 vereinigt sind. Das Dichtelement von Fig. 2d umfaßt einen innen- und einen außenliegenden Verstärkungsteil oder -ring 4, während das Dichtelement gemäß Fig. 2e ein einziges innenliegendes Verstärkungsteil 4 aufweist, wobei die der Verbindungsfläche mit dem Verstärkungsteil 4 gegenüberliegende Außenfläche des Dichtelements 3 einen Vorsprung aufweist, mit welchem dieses Dichtelement in eine entsprechend geformte Nut in den Blechkörper 1 einsetzbar ist.

Weitere als Verbundelemente ausgebildete elastomere Dichtelemente sind in den Fig. 2f bis 2l dargestellt, und zwar ebenfalls im Querschnitt. Diese Dichtelemente sind unterschiedlich strukturiert, weisen also im Bereich des elastomeren Körpers 3 Wulste und Dichtlippen auf, wobei die Verstärkungselemente 4 an unterschiedlichen Stellen der Elastomerstruktur eingesetzt sind, wodurch unterschiedliche Verformungskennlinien gezielt erzeugt werden. So durchsetzt den elastomeren Dichtring 3 gemäß Fig. 2f in ähnlicher Weise wie den Dichtring von Fig. 2b ein durchgehendes Verstärkungsteil 4, das zudem über den Elastomerkörper vorsteht. Auch die Verstärkungsteile gemäß den Fig. 2g, 2h und 2k stehen über den elastomeren Körper 3 jeweils hervor, und es sind an unterschiedlichen Stellen Wulste in dem Elastomerring angeordnet, während in Fig. 2l die Verstärkung als vollständig von dem elastomeren Material eingebettete EinLage ausgebildet ist. Auch das elastomere Dichtelement von Fig. 2j umfaßt ein vom elastomeren Material vorstehendes Verstärkungselement 4. Hier ist der Elastomerkörper im Schnitt trapezförmig ausgebildet und weist an der Außenfläche ein vorstehendes Profil auf, das zum Eingriff in eine entsprechend gestaltete Nut in dem Blechkörper 1 ausgebildet ist. Die Fig. 2i schließlich zeigt ein elastomeres Lippendichtelement mit drei nicht zusammenhängenden Verstärkungseinlagen beziehungsweise Verstärkungselementen 4a, 4b und 4c an radial unterschiedlichen Positionen der elastomeren Dichtelementstruktur.

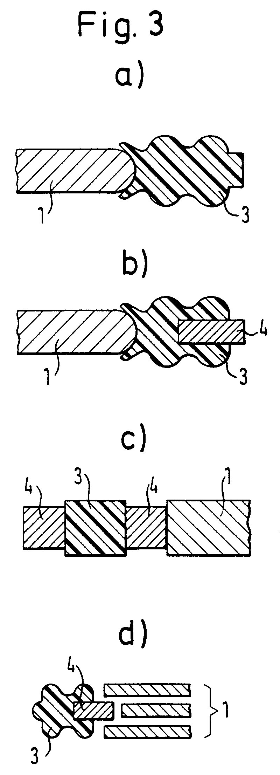

In den Fig. 3a bis 3d sind verschiedene Verbindungen vom elastomeren Dichtelement und dem Blechkörper dargestellt. Die Fig. 3a und 3b zeigen wulstig ausgebildete elastomere Dichtelemente, einmal mit und einmal ohne Verstärkungseinlage 4, wobei die außenliegenden umlaufenden Ränder der Dichtelemente mit im Schnitt U-förmigen Lippen versehen sind, welche den umlaufenden Rand der entsprechenden Blechkörperausnehmung umgreifen und somit eine feste Verbindung von Blechkörper 1 und Dichtelement 3 bilden.

Gemäß Fig. 3c ist ein beidseitig mit Verstärkungselementen 4 verbundenes zentrales Elastomerelement 3 über das außenliegende Verstärkungselement 4 an dem entsprechenden Durchtritt im Blechkörper angeschlossen, beispielsweise angeklebt. Während der Blechkörper 1 in den Fig. 3a, 3b und 3c einlagig ausgebildet ist, ist er in Fig. 3d mehr-, nämlich dreilagig, ausgebildet und die beiden außenliegenden Lagen des Blechkörpers weisen eine im Durchmesser größere Ausnehmung auf als die zentrale Blechlage, wodurch zwischen den beiden außenliegenden Lagen eine umlaufende Nut zustandekommt, in welche das Verstärkungselement 4 des Elastomerteils 3 eingreift.

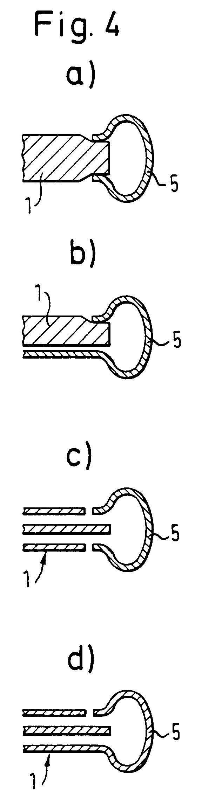

In den Fig. 4a bis 4d sind Blechdichtungselemente in Gestalt von Sickenringen dargestellt, die zur Abdichtung im Bereich des Brennraumdurchgangs der Flachdichtung von Fig. 1 vorgesehen sind.

In Fig. 4a ist der Sickenring 5 als getrenntes Element hergestellt und auf den Blechkörper im Bereich dessen Ausnehmungen randseitig aufgepreßt. In Fig. 4b besteht der Blechkörper aus zwei Lagen, und die dünnere der beiden Lagen ist als Sicke 5 umgeformt. Eine entsprechende Umformung als Sickenring findet sich auch in der Fig. 4d, wo der Blechkörper 1 dreilagig ausgebildet ist. Schließlich ist in Fig. 4c der Sickenring wiederum als getrenntes Teil hergestellt, welches die mittlere Lage, die über die beiden äußeren Lagen des dreilagigen Blechkörpers 1 vorsteht, umschließt.

**Patentansprüche**

1.    Flachdichtung mit einem Metallkörper,
der zumindest eine Ausnehmung und ein im Bereich der Ausnehmung vorgesehenes elastomeres Dichtelement aufweist,
dadurch **gekennzeichnet,**
daß das elastomere Dichtelement (3) als getrennt vom Blechkörper (1) hergestelltes Teil ausgebildet und mit dem Blechkörper (1) fest verbunden ist.

2.    Flachdichtung nach Anspruch 1,
dadurch **gekennzeichnet,**
daß das elastomere Dichtelement (3) ein Verstärkungsteil (4) enthält.

3. Flachdichtung nach Anspruch 1 oder 2,
dadurch **gekennzeichnet,**
daß das elastomere Dichtelement (3) oberflächenstrukturiert ist.

4. Flachdichtung nach einem der Ansprüche 1 bis 3,
dadurch **gekennzeichnet,**
daß das elastomere Dichtelement (3) mit mindestens einer Dichtlippe und/oder mindestens einem Dichtwulst bis fünf Dichtlippen oder Dichtwulsten, vor allem einem bis drei solcher Strukturelemente versehen ist.

5. Flachdichtung nach Anspruch 4,
dadurch **gekennzeichnet,**
daß ein Teil der Dichtwulste oder Dichtlippen metallverstärkt ist.

6. Flachdichtung nach einem der vorhergehenden Ansprüche,
dadurch **gekennzeichnet,**
daß der Blechkörper (1) mehrlagig ausbildet ist.

7. Flachdichtung nach Anspruch 6,
dadurch **gekennzeichnet,**
daß ein Teil der Blechlagen im Bereich wenigstens einer Ausnehmung (2) zur Abdichtung heißer Gase als Sickenring (5) ausgebildet ist.

8. Flachdichtung nach einem der Ansprüche 1 bis 7,
dadurch **gekennzeichnet,**
daß das elastomere Dichtelement (3) über einen von diesem vorstehendem Abschnitt seiner Verstärkungseinlage (4) an dem Blechkörper (1) befestigt ist.

9. Flachdichtung nach Anspruch 8,
dadurch **gekennzeichnet,**
daß der vorstehende Verstärkungseinlagenabschnitt über eine umlaufende Nut- und Federverbindung in der Wandung der entsprechenden Blechkörperausnehmung gehalten ist.

10. Flachdichtung nach einem der Ansprüche 2 bis 9,
dadurch **gekennzeichnet,**
daß das Verstärkungsteil (4) aus Metall besteht.

# Fig. 1

Fig. 2

# Fig. 3

## a)

## b)

## c)

## d)

# Fig. 4

## a)

## b)

## c)

## d)

| Europäisches Patentamt | **EUROPÄISCHER RECHERCHENBERICHT** | Nummer der Anmeldung |
|---|---|---|
| | | EP 92 10 1635 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 720 838 (ELRING) <br> * Zusammenfassung; Abbildungen * <br> --- | 1-5,8,10 | F16J15/12 |
| P,X | DE-C-4 009 105 (GOETZE AG) <br> * Zusammenfassung; Abbildungen * <br> --- | 1-5,8-10 | |
| X | DE-A-3 903 918 (GOETZE AG) <br> * Zusammenfassung; Abbildung 5A * <br> --- | 1-6,8-10 | |
| X | DE-A-3 718 569 (ELRING) <br><br> * Spalte 5, Zeile 42 - Zeile 52; Abbildung 6 * <br><br> ----- | 1,3-4, 6-7 | |
| | | | RECHERCHIERTE SACHGEBIETE (Int. Cl.5) |
| | | | F16J |

Der vorliegende Recherchenbericht wurde für alle Patentansprüche erstellt

| Recherchenort | Abschlußdatum der Recherche | Prüfer |
|---|---|---|
| DEN HAAG | 04 JUNI 1992 | NARMINIO A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)